# EUROPEAN PATENT APPLICATION

(11) **EP 2 017 225 A2**
(43) Date of publication of application: **21.01.2009**
(21) Application number: 08157542.5
(22) Date of filing: 04.06.2008
(51) Int. Cl.: C01F 7/14, C01F 7/34, C02F 1/52

(54) **Treatment of aluminium containing waste waters**

(30) Priority: 08.06.2007 SE 0701463
(71) Applicant: Kemira Kemi AB, 251 09 Helsingborg (SE)
(72) Inventor: Olsson, Henrik, 222 20 Lund (SE); Gylling, Anders, 260 40 Viken (SE); Dahlgren, Anders, 252 48 Helsingborg (SE); Bårström, Roger, 260 35 Ödåkra (SE); Hagstam, Gunnel, 240 30 Marieholm (SE)
(74) Representative: Stenbäck, Maria Elisabeth

(57) **Abstract**

The present invention relates to a process for production of an aluminium hydroxide containing filter cake from aluminium containing waste waters, wherein acidic and alkaline waste waters containing aluminium are mixed, allowed to react and dewatered thereby resulting in an aluminium containing filter cake. The present invention also relates to a filter cake obtainable by said process.

## Description

### Technical field of the invention

The present invention refers to an effluent treatment for recovery of aluminium from aluminium containing waste waters.

### Background of the invention

Today conventional effluent treatments for the aluminium extruding industry involves mixing of acidic anodizing baths, alkaline etching baths and colour baths to neutralise the baths. These processes focus on producing a pure effluent. The resulting purified effluent and contaminated filter cake may then be sent to a recipient and a landfill, respectively. The contaminated filter cake contains roughly about 20-25% solids content and cannot be used as a value adding product without extensive processing. The filter cake is considered a contamination source from an environmental point of view and therefore a difficult waste problem for the aluminium industry.

The process disclosed by F M Saunders (International Conference Aluminium Technology, London, March 11-13, 1986, vol 86, pp 83-90) refers to a treatment of anodizing wastes for recovery of aluminium. The document discloses segregated neutralisation of spent finishing solutions at an alkaline pH that was shown to improve the dewaterability of the sludge and reduce the production of wet sludge. Recovery of aluminium from the sludge as an aluminium sulphate solution, commercially marketable and useful, was achieved by addition of sulphuric acid to the dewatered sludge. The aluminium content was in close agreement with the theoretical aluminium content of about 34.6 % by weight. The process disclosed in the document is a continuous process with a hydraulic retention time of 8-10 min in a reactor, a temperature of at least 60°C and at an alkaline pH. Experiments showed that segregated neutralisation of spent finishing solutions at alkaline pH resulted in production of an aluminium hydroxide suspension having improved dewatering properties.

A problem associated with the above processes are disposal problems associated with the production of voluminous quantities of high-moisture sludge.

Thus, it would be very desirable to find processes that increases the solids content of the dewatered sludge and thereby reduces the sludge quantities further.

### Summary of the invention

The process according to present invention refers to a process for production of an aluminium hydroxide containing filter cake from aluminium containing waste waters, wherein acidic and alkaline waste waters containing aluminium are mixed in a ratio resulting in a pH of at least 8, preferably 9-11. The waste waters are then allowed to react with each other in a reactor during a retention time of at least 5 hours, preferably 5-15 hours, more preferably 6-12 hours, even more preferably 8-10 hours, at about 40-80°C, preferably 50-70°C, more preferably 60-65°C, wherein an aluminium hydroxide containing slurry is formed. Said slurry is then dewatered and an aluminium hydroxide containing filter cake comprising a solids content of at least 59%, preferably 60-80%, more preferably 65-70%, by weight, is obtained.

In the context of the present invention the wordings "retention time" and "residence time" are used interchangeably. However, they all are to be interpreted in the same way as the generally known definition of residence time.

The present invention also relates to a filter cake obtainable by the above mentioned process, which filter cake comprises boehmite, preferably as main aluminium hydroxide component, preferably as sole aluminium hydroxide component.

The process according to the invention solves the above mentioned problem with known processes and results in a filter cake with high solids content giving reduced amounts of waste. Since the aluminium hydroxide containing filter cake according to present invention contains such a high amount of solids content it can be used for further production of desirable compounds, the filter cake is then considered a value adding product instead of waste. As is disclosed above the present invention eliminates a difficult waste problem for the aluminium industry.

Further embodiments and advantages of the present invention will be more apparent from the subsequent description and the enclosed claims.

### Brief description of the drawings

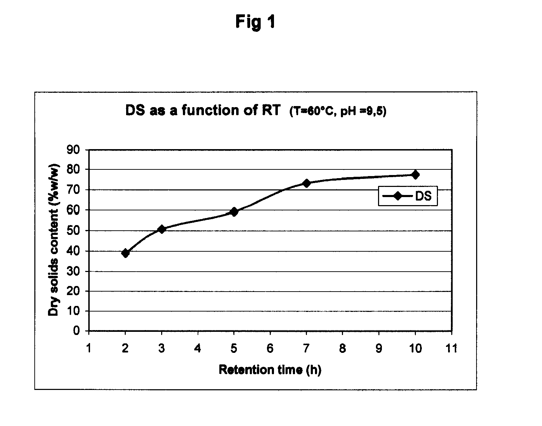

Figure 1 shows retention times to dry solids content of the precipitated aluminium hydroxide for Example 2.

### Detailed description of the invention

The present invention relates to combining acidic aluminium containing waste waters with alkaline aluminium containing waste waters. When the acidic and alkaline waste waters are combined and mixed a neutralization reaction occurs at specific conditions resulting in an aluminium hydroxide containing slurry, which slurry is dewatered and an aluminium hydroxide containing filter cake having a dry solids content of at least 59%, by weight, is obtained.

In one embodiment of the present invention the acidic and alkaline aluminium containing waste waters are mixed, to obtain mixed waste waters, in a ratio resulting in a pH of at least 8, preferably pH 9-11, of the mixture.

In another embodiment the mixed waste waters are allowed to react with each other during a retention time of at least 5 h, preferably 5-15 h, preferably 6-12 h, more preferably 8-10 h, at a temperature of about 40-80°C, preferably 50-70°C, more preferably 60-65°C.

In yet another embodiment of the present invention the aluminium concentration of the mixed alkaline and acidic waste waters is at least 0.5%, preferably at least 1%, by weight.

In a further embodiment of the present invention the aluminium hydroxide containing slurry is dewatered mechanically, preferably with a centrifuge, band filter press, screw press or chamber filter press. Before the mechanical dewatering of the slurry it might be fed into a storage tank or an intermediate vessel, in which the slurry might be stored or allowed to settle and then separated into slurry sediment and liquid phase. After an intermediate vessel the slurry sediment is subjected to mechanical dewatering.

In another embodiment the resulting aluminium hydroxide containing filter cake has a dry solids content of at least 59%, preferably 60-80% and more preferably 65-70%, by weight.

The process according to the invention relates to treatment of aluminium containing waste waters, e.g. from the anodizing process of aluminium, i.e. the electrolytic treatment used for surface finishing of aluminium, and from the die tool cleaning in hot sodium hydroxide. The anodizing process comprises the steps of pre-treatment for removing contaminants, rinsing, etching under alkaline conditions, rinsing, desmutting, anodizing under acidic conditions, rinsing, colouring and sealing of the formed coating. Anodizing will protect the aluminium parts by making the surface much harder than natural aluminium. Aluminium oxide is grown out of the surface during anodizing and then becomes aluminium hydrate that is extremely hard. Waste waters, useful according to the present invention, from a fabricating plant of aluminium products are mostly produced by the anodizing process and the die tool cleaning, but the present invention is however not limited to use of waste waters from said processes. All waste waters, alkaline and acidic waters, containing aluminium are of interest according to the invention. Waste waters of special interest according to the invention are the waste waters from the etching treatment, i.e. etching baths and rinses, preferably the rinse waste waters from the first and sometimes also second rinse, and waste waters from the anodizing treatment, i.e. anodizing baths and rinses, of the anodizing process. The alkaline waste from the die tool cleaning, usually called die etch, is also of great interest due to its aluminium content.

In the aluminium extruding industry most of the aluminium content in the waste waters is in the alkaline waste waters, e.g. etching baths, die etch, etch rinse water (first rinse) and optionally the second rinse. For example the aluminium content from the etching baths may be about 5-15% by weight, from the die etch about 2-7% by weight and from the first rinse about 1-8% by weight. In the waste waters from the following rinses the aluminium content is lower but may also be possible to use according to the invention. The alkaline waste waters from e.g. the etching bath, rinses and die etch are collected, e.g. in an intermediate storage tank and fed to the present process, wherein the collected alkaline liquor that is fed to the present process comprises about 0-10%, preferably 0-5%, by weight, of free caustic soda and an aluminium content of about 1-6% by weight.

The acidic waste waters from e.g. the anodizing bath and rinses and desmut are collected, e.g. in an intermediate storage tank and fed to the present process, wherein the collected acidic liquor that is fed to the present process comprises about 0.5-20% free acids, preferably 0.5-15% free acids, more preferably 2-10% free acids, by weight, which acids preferably comprise or consist of H₂SO₄, and an aluminium content of about 0.05-1.5%, preferably 0.1-1%, by weight.

According to one embodiment of the present invention the mixed alkaline and acidic aluminium containing waste waters, e.g. from an anodizing process, preferably contains at least 0.5%, preferably at least 1%, by weight, of aluminium, e.g. in a reactor.

When a waste water containing sodium aluminate in excess lye and a waste water containing aluminium sulphate in excess sulphuric acid are mixed, the result is a neutralization reaction of the acid and lye where aluminium hydroxide precipitates and starts to crystallize.

However, the neutralisation reaction according to the invention does not intend to reach a neutral pH. The acidic and alkaline waste waters are mixed and reacted in such amounts that there is an excess of alkaline waste waters resulting in a pH of at least 8, preferably 9-11.

If additives chosen from the group consisting of the active substances sodium gluconate and sorbitol, are present in the waste waters a conventional treatment would result in a considerably reduced dry solids content of the filter cake. However, if the process according to the invention is used said additives will not have such influence on the dry solids content of the filter cake as for conventional treatments.

In the present application reference is made to aluminium hydroxide, which is understood to include e.g. boehmite, gibbsite, bayerite, doyleite and nordstandite and amorphous aluminium hydroxide.

The process according to present invention attains an aluminium hydroxide slurry comprising the aluminium compound AIO(OH), boehmite. The crystal structure of boehmite has a high theoretical Al-content of 45% by weight. Known processes according to state of the art produce aluminium hydroxide slurries comprising x-ray amorphous aluminium hydroxide and crystalline gibbsite AI(OH)₃. Gibbsite has a theoretical AI-content of about 34.6 % by weight. The process according to present invention results in a cake with an aluminium content between 35 and 39% by weight despite impurities, e.g. compounds comprising carbon, sulphur and sodium.

When conventional methods for the waste water treatments are used under known conditions with lower retention times and neutralization at pH about 7 mostly x-ray amorphous aluminium hydroxide is formed, but when the process according to the present invention is used boehmite, and preferably mostly boehmite, is formed. Boehmite is formed during the process according to the present invention, preferably boehmite is the main aluminium hydroxide component, more preferably the only aluminium hydroxide component in the resulting slurry and dewatered filter cake. The resulting boehmite in the process according to the invention contains a higher content of aluminium compared to gibbsite. Since a high aluminium content is preferred if the resulting filter cake is to be used as a value adding product it is very important to obtain boehmite instead of x-ray amorphous aluminium hydroxide or gibbsite. The formation of boehmite during the process according to the present invention also greatly improves the dewaterability, resulting in a much drier filter cake than conventional methods.

The process according to the invention may e.g. be batchwise, intermittent, semi continuous or continuous. Preferably the process according to the invention is a continuous process.

The present invention is further illustrated by the following examples, which are not to be construed as limiting for the scope of protection of the present invention.

### Example 1

A trial was made using continuous process according to the invention to recover aluminum hydroxide from waste waters of alkaline etching baths, acidic anodizing baths and suitable rinse waters collected from an aluminium extruding and anodizing company. The compositions of the liquors are presented in the table 1.

**Table 1**

| | Al (% w/w) | Na (% w/w) | Free H₂SO₄ (% w/w) | Free NaOH (% w/w) |
|---|---|---|---|---|
| Alkaline | 2.95 | 4.72 | - | 3.84 |
| Acidic | 0.51 | - | 4.52 | - |

The alkaline and acidic waste waters, including rinse waters, were transferred from the etching and anodizing process to intermediate storage tanks.

The alkaline liquor was fed to the reactor at a constant flow of 4.87 I/h (density 1.13 kg/l) and the acidic liquor was fed to the reactor at a flow that kept the pH of the reactor at 10. The average feed for the acidic liquor was 6.89 l/h (density 1.03 kg/l). The reactor had a volume of 113 I and it was provided with a mechanical mixer. The temperatur of the rector was kept constant at 60 °C during the trial, using an immersion heater. The aluminum content of the mixture in the reactor was 1.57 % by weight.

Aluminum hydroxide was precipitated and the slurry containing aluminum hydroxide was continuously fed to a vessel, having a volume of 300 I, which was very slowly mechanicaly agitated. When the test was stopped after 4 days the slurry was pumped from the bottom of the vessel to a filter press and it was dewatered through a filter cloth having a permeability of 5 dm³ air/(dm² * min). The aluminium hydroxide slurry was very easy to filter and the throughput of the filtrate was high. The clear phase from the top of the vessel was discharged. The residual aluminum content in the clear phase was only 1.3 mg/kg after four days of processing.

Analyses of the filter cake were made after four days of processing. A sample of the filter cake was put in an oven at 105 °C for 24 hours. The dry solids content of the dried filter cake was 67.2% by weight.

The dried filter cake was also analyzed with X-ray fluoresence method (XRF) for elements, except for carbon where a Leco combustion furnace were used. The aluminium content was 36% by weight and the content of other elements can be seen in the table 2.

**Table 2: Element analysis**

| Element | (% w/w) |
|---|---|
| Fe | < 0.1 |
| P | < 0.1 |
| Na | 1.0 |
| S | 0.6 |
| Ca | < 0.1 |
| Mg | < 0.1 |
| Si | 0.1 |
| C | 0.9 |

### Example 2

Trials were made using continuous process according to the invention to recover aluminum hydroxide from waste waters of alkaline etching baths, acidic anodizing baths and suitable rinse waters collected from an aluminium extruding and anodizing company. The compositions of the liquors are presented in the table 3.

**Table 3**

| | Al (% w/w) | Na (% w/w) | Free H₂SO₄ (% w/w) | Free NaOH (% w/w) |
|---|---|---|---|---|
| Alkaline | 4.95 | 9.00 | - | 4.72 |
| Acidic | 1.20 | - | 12.10 | - |

The alkaline and acidic waste waters, including rinse waters, were transferred from the etching and anodizing process to intermediate storage tanks.

The alkaline liquor was fed to the reactor at different constant flows from 250 - 1250 ml/h (density 1.26 kg/l) and the acidic liquor was fed to the reactor at a flow that kept the pH of the reactor at 9.5. The average feed for the acidic liquor depended on the flow of the alkaline liquor but was 131 ml/h (density 1.18 kg/l) when the residence time was adjusted to 10 hours (with an alkaline flow of 119 ml/h) and comparably 654 ml/h when the residence time was adjusted to 2 h (with an alkaline flow of 596 ml/h). The reactor had a volume of 2.5 I and it was provided with a mechanical mixer. The temperatur of the rector was kept constant at 60 °C during the trials, using an immersion heater. The aluminum content of the mixture in the reactor was kept at 3 % by weight in all the tests.

Aluminum hydroxide was precipitated using different residence times and every trial was started with the reactor full of water. After at least four hydraulic retention times a sample was withdrawn, dewatered by Bühner funnel and the filter cake was dried in an oven at 105 °C for 24 hours. The dry solids contents of the dried filter cakes vs. residence times are shown in the fig 1. From the fig 1 can be seen that long residence times over 5 hours have a very positive effect on dewaterability of the precipitated aluminium hydroxide, i.e. a higher dry solids content of the resulting filter cake.

## Claims

1. A continuous process for the production of an aluminium hydroxide containing filter cake from aluminium containing waste waters, wherein acidic and alkaline aluminium containing waste waters are mixed in a ratio resulting in a pH of 9-11, to obtain mixed waste waters, and said mixed waste waters are allowed to react with each other during a retention time of at least 5 h at a temperature within the range of about 40-80°C resulting in an aluminium hydroxide containing slurry, which slurry is dewatered and an aluminium hydroxide containing filter cake is obtained, which filter cake comprises boehmite.

2. Process according to claim 1, wherein the dry solids content of the filter cake after dewatering is at least 59%, preferably 60-80%, more preferably 65-70%, by weight.

3. Process according to claim 1 or 2, wherein the reaction time is 5-15 h, preferably 6-12 h, more preferably 8-10 h.

4. Process according to any one of the preceding claims, wherein said acidic and alkaline aluminium containing waste waters are mixed and allowed to react at a temperature of 50-70°C, preferably 60-65°C.

5. Process according to any one of the preceding claims, wherein the aluminium concentration in the reactor where the alkaline and acidic waste waters are mixed is at least 0.5%, preferably at least 1%, by weight.

6. Process according to any one of the preceding claims, wherein said slurry is dewatered with a centrifuge, band filter press, screw press or chamber filter press.
